# FASCICULE DE BREVET EUROPEEN

(11) **EP 1 918 526 B1**
(45) Date de publication et mention de la délivrance du brevet: **20.02.2019**
(21) Numéro de dépôt: 07075862.8
(22) Date de dépôt: 05.10.2007
(51) Int. Cl.: F01D 11/24

(54) **Secteur d'anneau de turbine de turbomachine**
Ringsektor einer Turbine einer Strömungsmaschine
Turbomachine turbine shroud sector

(30) Priorité: 30.10.2006 FR 0609501
(43) Date de publication de la demande: 07.05.2008
(73) Titulaire: Safran Aircraft Engines, 75015 Paris (FR)
(72) Inventeur: Botrel, Erwan, 94140 Alfortville (FR); Dorin, Claire D., 94700 Maisons-Alfort (FR)
(74) Mandataire: Gevers & Orès

(56) Documents cités:
- GB-A- 1 330 892
- US-A1- 2003 131 980
- US-A1- 2005 129 499

## Description

La présente invention concerne le domaine des turbomachines, en particulier le refroidissement des secteurs d'anneau de turbine de turbomachine.

Une turbomachine aéronautique comporte classiquement un compresseur, une chambre de combustion et une turbine. Le rôle de la turbine est d'assurer l'entraînement en rotation du compresseur en prélevant une partie de l'énergie de pression des gaz chauds sortant de la chambre de combustion et en la transformant en énergie mécanique.

La turbine, située en aval de la chambre de combustion, est l'organe de la turbomachine qui travaille dans les conditions les plus sévères. Elle est notamment soumise à des contraintes thermiques et mécaniques importantes générées par les gaz chauds en sortie de chambre.

Une turbine comprend classiquement au moins un distributeur, constitué d'une grille d'aubes fixes par rapport au carter de la turbomachine, et au moins une roue mobile, comportant un ensemble d'aubes susceptible d'être mis en rotation.

Une roue mobile est entourée d'un anneau fixe solidaire du carter. Cet anneau a notamment pour fonction de reconstituer par sa surface intérieure la limite extérieure de la veine aérodynamique. Le plus souvent, cet anneau peut être constitué d'une pluralité de secteurs. En raison de son exposition permanente aux gaz chauds, un anneau de turbine présente une durée de vie réduite. Il est donc nécessaire de le refroidir pour lui conférer une bonne tenue à haute température.

Une solution de refroidissement connue consiste à munir l'anneau de tôles multi-perforées entourant ledit anneau. De telles tôles sont décrites dans les documents EP0893577, EP1134360, EP0516322, EP1225309, EP0709550, EP1176285, FR2662746, US4693667 et EP1533478. Une tôle multi-perforée possède généralement la forme d'une baignoire en ce sens qu'elle comporte un fond et des parois latérales. Des orifices sont répartis essentiellement sur le fond de la tôle multi-perforée en rangée. De l'air de refroidissement, traverse la tôle multi-perforée par les orifices et impacte la paroi de l'anneau pour le refroidir. Le fond de la tôle multi-perforée est espacé de l'anneau par un entrefer. Tous ces documents de l'art antérieur présentent un entrefer constant. Les documents GB1330892 et US2003/0131980 présentent un entrefer évolutif selon une direction axiale mais restent toutefois insatisfaisants en terme de refroidissement.

La température n'est pas homogène en tout point de l'anneau. Ceci a pour effet de créer des déformations de ce dernier. Lorsque l'anneau est constitué d'une pluralité de secteurs, chaque secteur se présente sous la forme d'un arc de cercle correspondant à un secteur angulaire de l'anneau. A chaque secteur d'anneau correspond une tôle multi-perforée.

Un premier type de déformation peut se traduire circonférentiellement par un décambrage des secteurs, c'est-à-dire une perte de la concentricité des secteurs et par là-même de l'anneau.

Un second type de déformation peut se traduire axialement par un déversement axial des secteurs, c'est-à-dire un décalage excessif de la distance de la partie amont ou de la partie aval des secteurs par rapport à l'axe (X) de la turbomachine sur laquelle ils sont fixés.

Ces deux types de déformations peuvent conduire à une usure mécanique de l'anneau par frottement des aubes de la roue mobile en vis-à-vis. Ces usures créent un jeu irréversible entre les sommets des aubes et l'anneau de turbine. Ce jeu nuit au rendement de la turbomachine.

Pour atténuer ces déformations, il est nécessaire d'homogénéiser la température des secteurs d'anneau. Pour y parvenir, il est connu de faire varier sur une tôle multi-perforée différents paramètres comme le diamètre des orifices, le nombre d'orifices par rangée ou le pas entre chaque rangée.

La présente invention a pour but de pallier les problèmes précités en proposant une solution plus efficace par rapport aux solutions existantes. A cet effet, elle concerne un secteur d'anneau de turbine tel que défini selon la revendication 1. Ainsi, contrairement aux secteurs d'anneau muni de tôle multi-perforée antérieurs, le plan du fond de la tôle multi-perforée selon l'invention n'est pas séparée d'une distance constante du plan de la paroi du secteur d'anneau.

Le fond de la tôle multi-perforée peut adopter une multitude de forme. Elle peut notamment être évolutive linéairement, curviligne ou bien encore par paliers, et ce sur sa totalité ou une partie seulement.

L'invention permet avantageusement de réduire le gradient thermique sur les secteurs d'anneau. Une réduction de 40 Kelvin et davantage est escomptée, ce qui permet d'augmenter la durée de vie des anneaux.

Avantageusement, le secteur d'anneau selon l'invention peut non seulement équiper des turbines futures mais également des turbines en service disposant déjà de secteurs d'anneau comportant une tôle multi-perforée. En déterminant les zones du secteur d'anneau à refroidir plus intensément, il est possible de remplacer l'ancienne tôle multi-perforée par une nouvelle tôle multi-perforée conforme à l'invention pour améliorer les caractéristiques de la turbine et accroître sa durée de vie, et ce, avec un temps de mise au point réduit et sans modification des pièces environnantes.

D'autres avantages et caractéristiques de l'invention ressortiront à la lecture de description détaillée qui suit en référence aux figures annexées, fournies à titre d'exemples non limitatifs, sur lesquelles :
- la figure 1 représente une vue en une coupe d'un secteur d'anneau selon un premier mode de réalisation de l'invention ;
- la figure 2 représente une vue en perspective d'une tôle multi-perforée selon un premier mode de réalisation de l'invention ;
   - la figure 3 représente une vue en coupe d'un secteur d'anneau selon un second mode de réalisation de l'invention ;
   - la figure 4 représente une vue en coupe d'un secteur d'anneau selon un troisième mode de réalisation de l'invention ;
   - la figure 5 représente une vue en coupe d'un secteur d'anneau selon un quatrième mode de réalisation de l'invention ; et
   - la figure 6 représente une vue schématique en perspective d'une turbomachine.

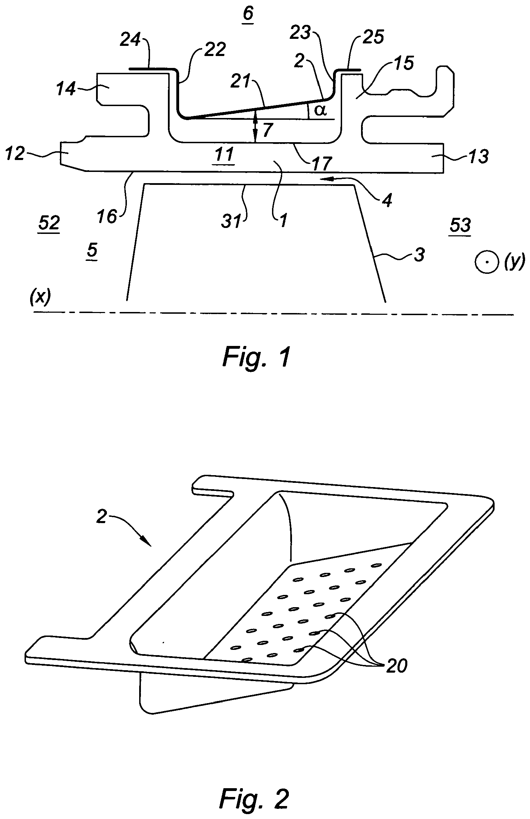

La figure 1 illustre un secteur d'anneau 1 de turbine constitué par une paroi 11 comportant une surface intérieure 16 et une surface extérieure 17, la surface intérieure 16 délimitant la limite extérieure d'une veine aérodynamique 5.

Lorsque les secteurs d'anneau 1 sont montés sur la turbine 8 d'une turbomachine 9, ils entourent circonférentiellement une roue mobile dont les sommets 31 des aubes 3 sont situés en regard de la surface intérieure 16 de la paroi 11 du secteur d'anneau 1. L'espace situé entre les sommets 31 d'aube 3 et la surface intérieure 16 de la paroi 11 du secteur d'anneau 1 constitue un jeu 4.

Un secteur d'anneau 1 se fixe généralement sur le carter (non représenté) d'une turbine 8 par des moyens de fixation tels que des tenons 14 et 15 faisant saillie de la surface extérieure 17 de la paroi 11 du secteur d'anneau 1. Ces tenons 14 et 15, situés à chacune des extrémités amont 12 et aval 13 du secteur d'anneau 1, sont destinés à coopérer avec des rainures annulaires complémentaires (non représentées).

L'amont et l'aval se définissent par rapport au sens de l'écoulement des gaz dans la veine aérodynamique 5. Sur la figure 1, l'amont 52 se situe à gauche et l'aval 53 se situe à droite.

Un espace délimitée par les tenons 14 et 15 et la surface extérieure 17 de la paroi 11 du secteur d'anneau 1 définit une première « baignoire », les tenons 14 et 15 formant les parois latérales de la baignoire et la paroi 11 du secteur d'anneau 1 formant le fond de la baignoire.

Cette première baignoire permet de loger une tôle multi-perforée 2 laquelle se présente sous la forme d'une seconde « baignoire » comportant des parois latérales 22 et 23 et un fond 21. Les extrémités 24 et 25 des parois latérales 22 et 23 de la tôle multi-perforée 2 sont recourbées et forment des rebords de manière à pouvoir prendre appui respectivement sur les tenons 14 et 15 du secteur d'anneau 1. L'épaisseur d'une tôle multi-perforée 2 est sensiblement inférieure à celui du secteur d'anneau 1. La tôle multi-perforée 2 peut être obtenue par emboutissage. La fixation de cette tôle multi-perforée 2 sur le secteur d'anneau 1 peut s'effectuer par brasage. La paroi 11 du secteur d'anneau 1 et le fond 21 de la tôle multi-perforée 2 sont séparées d'une distance constituant un entrefer 7.

De l'air de refroidissement sous pression, pouvant être prélevé depuis le fond de la chambre de combustion, depuis le compresseur ou depuis tout autre moyen équivalent susceptible de fournir de l'air frais, est acheminé dans un espace 6 situé à l'opposé du secteur d'anneau 1 par rapport à la tôle multi-perforée 2. La surpression dans l'espace 6 force l'air de refroidissement à traverser la tôle multi-perforée 2 par des orifices 20 représentés sur la figure 2. Les orifices 20 peuvent être réalisés par un procédé d'électroérosion EDM (Electro Discharge Machining) ou par un procédé de perçage laser.

L'air de refroidissement sortant de la tôle multi-perforée 2 par les orifices 20 impacte la surface extérieure 17 de la paroi 11 du secteur d'anneau 1. Des échanges thermiques sont provoqués en chaque zone d'impact en regard de chaque orifice 20. L'air ainsi chauffé est ensuite évacué dans la veine d'air aérodynamique 5 par des passages (non représentés) généralement réalisés à travers le secteur d'anneau 1. Ces passages peuvent être identiques à ceux décrits dans les documents précités, par exemple, le document EP0516322 présentant un secteur d'anneau comportant des passages de grandes longueurs. L'air sortant de ces passages pour entrer dans la veine aérodynamique 5 doit présenter un débit suffisant pour initier un film d'air à l'amont 12 du secteur d'anneau 1. L'invention permet d'apporter un débit d'air plus important à l'amont 12 qu'à l'aval 13 du secteur d'anneau 1.

Le coefficient d'échange thermique dépend de la distance entre l'orifice 20 et la zone impactée et donc de l'entrefer 7. En règle générale, la diminution de l'entrefer 7 fait accroître le coefficient d'échange thermique. A l'inverse, l'augmentation de l'entrefer 7 fait décroître le coefficient d'échange thermique. Il est ainsi possible de contrôler localement l'échange thermique entre l'air de refroidissement et la paroi 11 du secteur d'anneau 1 en faisant varier l'entrefer 7. Ce paramètre peut en outre être combiné à au moins l'un des autres paramètres connus susceptibles de faire varier le coefficient d'échange thermique tels que le diamètre des orifices, le nombre d'orifices par rangée ou le pas entre chaque rangée.

Les gaz chauds évoluant de l'amont 52 vers l'aval 53, la partie amont 12 du secteur d'anneau 1 est généralement plus chaude que la partie aval 13 du secteur d'anneau 1. Il est donc recommandé de refroidir plus intensément la partie amont 12. Dans ce cas, la tôle multi-perforée 2 peut être conçue de manière à ce que l'entrefer 7 situé à l'amont 12 du secteur d'anneau 1 soit inférieur à l'entrefer 7 situé à l'aval 13 du secteur d'anneau 1.

Dans un premier mode de réalisation de l'invention représenté sur la figure 1, l'entrefer 7 est évolutif linéairement. Le fond 21 de la tôle multi-perforée 2 s'étend selon un plan coupant l'axe (X) de révolution de la turbine 8, lequel est confondu avec l'axe (X) de révolution de la turbomachine 9. Le fond 21 de la tôle multi-perforée 2 forme un angle α avec l'axe (X) de révolution de la turbine 8. Cet angle α est nécessairement supérieure à 0° et peut aller jusqu'à 45°. Selon les conditions de fonctionnement liées à chaque turbine, une pente correctement ajustée permet d'obtenir une température plus homogène du secteur d'anneau 1.

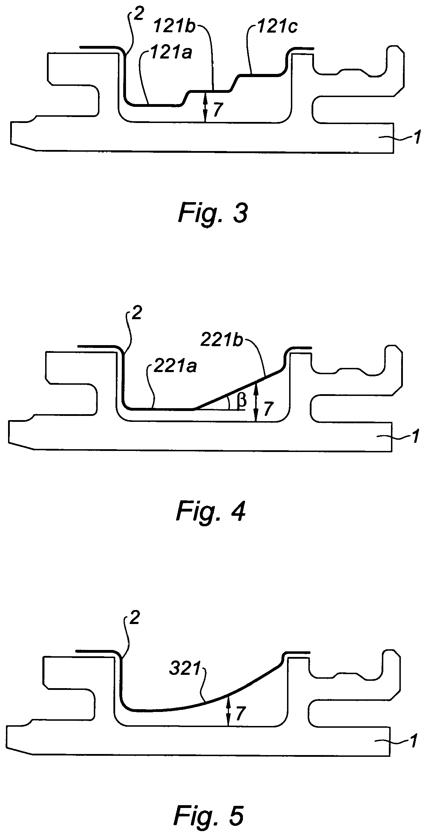

Dans un second mode de réalisation de l'invention représenté sur la figure 3, la valeur de l'entrefer 7 est évolutive par paliers, le fond 21 de la tôle multi-perforée 2 présentant une forme en « escalier ». Le fond 21 de la tôle multi-perforée 2 est constitué d'une pluralité de « paliers » ou de « marches » 121a, 121b et 121c successifs.

Dans un troisième mode de réalisation de l'invention représenté sur la figure 4, l'entrefer 7 est constant en regard d'une première partie 221a de la tôle multi-perforée 2 et évolutif en regard d'une seconde partie 221b de la tôle multi-perforée 2, cette évolution pouvant être linéaire ou curviligne. Dans l'exemple illustré à la figure 4, la seconde partie 221b évolue linéairement et forme un angle β avec la première partie 221a. Cet angle β est nécessairement supérieur à 0° et peut aller jusqu'à 60°.

Dans un quatrième mode de réalisation de l'invention représenté sur la figure 5, l'entrefer 7 est évolutif de manière curviligne selon une courbe, par exemple monotone et croissante de l'amont vers l'aval. Le fond 321 de la tôle 2 est alors convexe en regard de la paroi 11 du secteur d'anneau 1.

Bien que les modes de réalisation ci-dessus décrivent des entrefers 7 évolutifs selon une direction axiale (X), il est possible d'adapter l'entrefer 7 afin qu'il soit évolutif selon une direction circonférentielle (Y), dans un plan perpendiculaire à la direction axiale, par exemple pour corriger les effets thermiques induits par les fuites inter-secteurs.

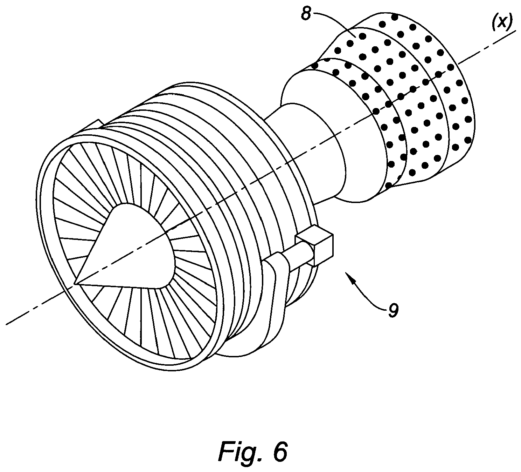

La présente invention se rapporte également à un anneau de turbine comportant une pluralité de secteurs d'anneau tels que décrits ci-dessus, ainsi qu'à une turbine 8, représentée sur la figure 6 par un motif à pois, comportant un anneau de turbine précité.

L'invention concerne également une turbomachine 9, également représenté sur la figure 6, comportant une turbine 8 précitée.

## Revendications

1. Secteur d'anneau (1) de turbine (8), d'orientation longitudinale (X), comportant :
- une paroi (11) comportant, entre ses extrémités amont (12) et aval (13) par rapport à l'écoulement des gaz, une surface intérieure (16) longitudinale délimitant une veine aérodynamique (5) dans laquelle s'écoulent les gaz, et
- une tôle multi-perforée (2), située à l'opposé de la veine aérodynamique (5) par rapport à la paroi (11), ladite tôle multi-perforée (2) comprenant un fond (21, 121, 221 ,321) en regard d'une surface extérieure (17) longitudinale de la paroi (11) du secteur d'anneau (1), le fond étant relié en amont à une paroi latérale radiale amont (22) prolongée par une extrémité amont (24) de la tôle multi-perforée (2) qui prend appui sur un tenon amont (14) prévu à l'extrémité amont (12) de la paroi (11) du secteur d'anneau (1), le fond étant relié en aval à une paroi latérale radiale aval (23) prolongée par une extrémité aval (25) de la tôle multi-perforée qui prend appui sur un tenon aval (15) prévu à l'extrémité aval de la paroi (11) du secteur d'anneau (1),
un espace délimité par les tenons amont et aval (14, 15) et la surface extérieure (17) de la paroi (1) du secteur d'anneau (1) définissant une première baignoire, les tenons amont et aval (14, 15) formant les parois latérales de la baignoire et la paroi (11) du secteur d'anneau (1) formant le fond de la première baignoire, la tôle multi-perforée (2) se présentant sous la forme d'une second baignoire, logée dans la première baignoire, et comportant les parois latérales (22, 23) et le fond (21),
la distance entre la surface extérieure (17) de la paroi (11) du secteur d'anneau (1) et le fond (21, 121, 221, 321) de la tôle multi-perforée (2) définissant un entrefer (7) lequel est évolutif selon une direction axiale, de l'extrémité amont (12) à tenon (14) vers l'extrémité aval (13) à tenon (15) de la paroi, **caractérisé en ce que** la valeur de l'entrefer situé du côté de l'extrémité amont (12) à tenon (14) de la paroi (11) est inférieure à la valeur de l'entrefer situé du côté de l'extrémité aval (13) à tenon (15) de la paroi (11),
la paroi latérale radiale amont (22) s'étendant radialement vers le bas davantage que la paroi latérale radiale aval (23), de sorte que l'extrémité amont du fond, située longitudinalement au niveau de la paroi latérale radiale amont (22), est positionnée en dessous de l'extrémité aval du fond, située longitudinalement au niveau de la paroi latérale radiale aval (23).

2. Secteur d'anneau de turbine (1) selon la revendication 1 **caractérisé en ce que** l'entrefer (7) est évolutif linéairement.

3. Secteur d'anneau (1) de turbine selon la revendication 1 caractérisé en ce l'entrefer (7) est évolutif de manière curviligne.

4. Secteur d'anneau (1) de turbine selon la revendication 1 **caractérisé en ce que** ledit entrefer (7) est constant en regard d'une première partie (221a) de la tôle multi-perforée (2) et évolutif en regard d'une seconde partie (221b) de la tôle multi-perforée (2).

5. Secteur d'anneau (1) de turbine selon la revendication 4 **caractérisé en ce que** l'entrefer (7), en regard de la seconde partie (221b) de la tôle multi-perforée (2), est évolutif linéairement.

6. Secteur d'anneau (1) de turbine selon la revendication 4 **caractérisé en ce que** l'entrefer (7), en regard de la seconde partie (221b) de la tôle multi-perforée (2), est évolutif de manière curviligne.

7. Secteur d'anneau (1) de turbine selon la revendication 6 **caractérisé en ce que** l'entrefer (7), en regard de la seconde partie (221b) de la tôle multi-perforée (2), est évolutif de manière curviligne selon une courbe monotone et croissante.

8. Secteur d'anneau (1) de turbine selon la revendication 1 **caractérisé en ce que** la valeur de l'entrefer est évolutive par paliers (121a, 121b, 121c), le fond de la tôle multi-perforée (2) présentant une forme en escalier.

9. Secteur d'anneau (1) de turbine selon l'une des revendications précédentes **caractérisé en ce que** l'entrefer (7) est évolutif selon une direction circonférentielle.

10. Anneau de turbine comportant une pluralité de secteurs d'anneau (1) selon l'une des revendications précédentes.

11. Turbine (8) comportant un anneau de turbine selon la revendication précédente.

12. Turbomachine (9) comportant une turbine (8) selon la revendication précédente.

## Patentansprüche

1. Ringsektor (1) einer Turbine (8) mit Längsausrichtung (X), enthaltend:
- eine Wand (11), die zwischen ihren stromaufwärtigen (12) und stromabwärtigen (13) Enden in Bezug auf die Strömung der Gase eine längsgerichtete innere Oberfläche (16) enthält, die einen aerodynamischen Strom (5) abgrenzt, in dem die Gase strömen, und
- ein mehrfach durchbohrtes Blech (2), das sich gegenüberüberliegend vom aerodynamischen Strom (5) in Bezug auf die Wand (11) befindet, wobei das mehrfach durchbohrte Blech (2) einer längsgerichteten äußeren Oberfläche (17) der Wand (11) des Ringsektors (1) gegenüber einen Boden (21, 121, 221, 321) umfasst, wobei der Boden stromaufwärts mit einer stromaufwärtigen radialen seitlichen Wand (22) verbunden ist, die durch ein stromaufwärtiges Ende (24) des mehrfach durchbohrten Blechs (2) verlängert ist, das sich auf einem stromaufwärtigen Zapfen (14) stützt, der am stromaufwärtigen Ende (12) der Wand (11) des Ringsektors (1) vorgesehen ist, wobei der Boden stromabwärts mit einer stromabwärtigen radialen seitlichen Wand (23) verbunden ist, die durch ein stromabwärtiges Ende (25) des mehrfach durchbohrten Blechs verlängert ist, das sich auf einem stromabwärtigen Zapfen (15) stützt, der am stromabwärtigen Ende der Wand (11) des Ringsektors (1) vorgesehen ist,
wobei ein Raum, der durch die stromaufwärtigen und stromabwärtigen Zapfen (14, 15) und die äußere Oberfläche (17) der Wand (1) des Ringsektors (1) abgegrenzt ist, eine erste Wanne definiert, wobei die stromaufwärtigen und stromabwärtigen Zapfen (14, 15) die seitlichen Wände der Wanne bilden und die Wand (11) des Ringsektors (1) den Boden der ersten Wanne bildet, wobei das mehrfach durchbohrte Blech (2) die Form einer zweiten Wanne aufweist, die in der ersten Wanne aufgenommen ist, und die seitlichen Wände (22, 23) und den Boden (21) enthält,
wobei der Abstand zwischen der äußeren Oberfläche (17) der Wand (11) des Ringsektors (1) und dem Boden (21, 121, 221, 321) des mehrfach durchbohrten Blechs (2) einen Spalt (7) definiert, der gemäß einer axialen Richtung vom stromaufwärtigen Ende (12) an Zapfen (14) zum stromabwärtigen Ende (13) an Zapfen (15) der Wand erweiterbar ist, **dadurch gekennzeichnet, dass** der Wert des Spalts, der sich auf der Seite des stromaufwärtigen Endes (12) an Zapfen (14) der Wand (11) befindet, niedriger ist als der Wert des Spalts, der sich auf der Seite des stromabwärtigen Endes (13) an Zapfen (15) der Wand (11) befindet,
wobei die stromaufwärtige radiale seitliche Wand (22) sich radial mehr nach unten erstreckt als die stromabwärtige radiale seitliche Wand (23), sodass das stromaufwärtige Ende des Bodens, das sich in Längsrichtung auf Höhe der stromaufwärtigen radialen seitlichen Wand (22) befindet, unterhalb des stromabwärtigen Endes des Bodens positioniert ist, das sich in Längsrichtung auf Höhe der stromabwärtigen radialen seitlichen Wand (23) befindet.

2. Ringsektor (1) einer Turbine nach Anspruch 1, **dadurch gekennzeichnet, dass** der Spalt (7) linear erweiterbar ist.

3. Ringsektor (1) einer Turbine nach Anspruch 1, **dadurch gekennzeichnet, dass** der Spalt (7) auf krummlinige Weise erweiterbar ist.

4. Ringsektor (1) einer Turbine nach Anspruch 1, **dadurch gekennzeichnet, dass** der Spalt (7) einem ersten Teil (221a) des mehrfach durchbohrten Blechs (2) gegenüber konstant ist und einem zweiten Teil (221b) des mehrfach durchbohrten Blechs (2) gegenüber erweiterbar ist.

5. Ringsektor (1) einer Turbine nach Anspruch 4, **dadurch gekennzeichnet, dass** der Spalt (7) dem zweiten Teil (221b) des mehrfach durchbohrten Blechs (2) gegenüber linear erweiterbar ist.

6. Ringsektor (1) einer Turbine nach Anspruch 4, **dadurch gekennzeichnet, dass** der der Spalt (7) dem zweiten Teil (221b) des mehrfach durchbohrten Blechs (2) gegenüber auf krummlinige Weise erweiterbar ist.

7. Ringsektor (1) einer Turbine nach Anspruch 6, **dadurch gekennzeichnet, dass** der Spalt (7) dem zweiten Teil (221b) des mehrfach durchbohrten Blechs (2) gegenüber auf krummlinige Weise gemäß einer monotonen und steigenden Kurve erweiterbar ist.

8. Ringsektor (1) einer Turbine nach Anspruch 1, **dadurch gekennzeichnet, dass** der Wert des Spalts pro Lager (121a, 121b, 121c) erweiterbar ist, wobei der Boden des mehrfach durchbohrten Blechs (2) eine treppenartige Form aufweist.

9. Ringsektor (1) einer Turbine nach einem der vorstehenden Ansprüche, **dadurch gekennzeichnet, dass** der Spalt (7) gemäß einer Umfangsrichtung erweiterbar ist.

10. Turbinenring, enthaltend eine Vielzahl von Ringsektoren (1) nach einem der vorstehenden Ansprüche.

11. Turbine (8), enthaltend einen Turbinenring nach dem vorstehenden Anspruch.

12. Turbomaschine (9), enthaltend eine Turbine (8) nach dem vorstehenden Anspruch.

## Claims

1. Turbine (8) ring sector (1), of longitudinal orientation (X), comprising:
- a wall (11) comprising, between the upstream (12) and downstream (13) ends thereof with respect to the flow of the gases, a longitudinal inner surface (16) delimiting a streamlined duct (5) wherein the gases flow, and
- a multi-perforated sheet (2), located opposite the streamlined duct (5) with respect to the wall (11), said multi-perforated sheet (2) comprising a bottom (21, 121, 221, 321) facing a longitudinal outer surface (17) of the wall (11) of the ring sector (1), the bottom being connected upstream to an upstream radial side wall (22) extended by an upstream end (24) of the multi-perforated sheet (2) which bears against an upstream tenon (14) provided at the upstream end (12) of the wall (11) of the ring sector (1), the bottom being connected downstream to a downstream radial side wall (23) extended by a downstream end (25) of the multi-perforated sheet that bears against a downstream tenon (15) provided at the downstream end of the wall (11) of the ring sector (1),
a space delimited by the upstream and downstream tenons (14, 15) and the outer surface (17) of the wall (1) of the ring sector (1) defining a first trough, the upstream and downstream tenons (14, 15) forming the side walls of the trough and the wall (11) of the ring sector (1) forming the bottom of the first trough, the multi-perforated sheet (2) having the form of a second trough, housed in the first trough, and comprising the side walls (22, 23) and the bottom (21),
the distance between the outer surface (17) of the wall (11) of the ring sector (1) and the bottom (21, 121, 221, 321) of the multi-perforated sheet (2) defining a gap (7) which can change along to an axial direction, from the upstream end (12) with tenon (14) to the downstream end (13) with tenon (15) of the wall, **characterised in that** the value of the gap located on the side of the upstream end (12) with tenon (14) of the wall (11) is less than the value of the gap located on the side of the downstream end (13) with tenon (15) of the wall (11),
the upstream radial side wall (22) extending radially downwards farther than the downstream radial side wall (23), such that the upstream end of the bottom, located longitudinally at the level of the upstream radial side wall (22), is positioned below the downstream end of the bottom, located longitudinally at the level of the downstream radial side wall (23).

2. Turbine ring sector (1) according to claim 1, **characterised in that** the gap (7) can change linearly.

3. Turbine ring sector (1) according to claim 1, **characterised in that** the gap (7) can change in a curved manner.

4. Turbine ring sector (1) according to claim 1, **characterised in that** said gap (7) is constant with regard to a first portion (221a) of the multi-perforated sheet (2) and can change with regard to a second portion (221b) of the multi-perforated sheet (2).

5. Turbine ring sector (1) according to claim 4, **characterised in that** the gap (7), with regard to the second portion (221b) of the multi-perforated sheet (2), can change linearly.

6. Turbine ring sector (1) according to claim 4, **characterised in that** the gap (7), with regard to the second portion (221b) of the multi-perforated sheet (2), can change in a curved manner.

7. Turbine ring sector (1) according to claim 6, **characterised in that** the gap (7), with regard to the second portion (221b) of the multi-perforated sheet (2), can change in a curved manner along a monotonic and growing curve.

8. Turbine ring sector (1) according to claim 1, **characterised in that** the value of the gap can change in steps (121a, 121b, 121c), the bottom of the multi-perforated sheet (2) having a staircase shape.

9. Turbine ring sector (1) according to one of the preceding claims, **characterised in that** the gap (7) can change along a circumferential direction.

10. Turbine ring comprising a plurality of ring sectors (1) according to one of the preceding claims.

11. Turbine (8) comprising a turbine ring according to the preceding claim.

12. Turbine engine (9) comprising a turbine (8) according to the preceding claim.
